(19) Europäisches Patentamt
European Patent Office
Office européen des brevets

(11) Veröffentlichungsnummer: **0 223 115**
**B1**

(12) # EUROPÄISCHE PATENTSCHRIFT

(45) Veröffentlichungstag der Patentschrift: **19.04.89**

(51) Int. Cl.[4]: **C08F 283/08**

(21) Anmeldenummer: **86114918.5**

(22) Anmeldetag: **27.10.86**

(54) **Modifizierte Polyphenylenetherharze mit Lactamgruppen und deren Herstellung.**

(30) Priorität: **13.11.85 DE 3540116**

(43) Veröffentlichungstag der Anmeldung: **27.05.87 Patentblatt 87/22**

(45) Bekanntmachung des Hinweises auf die Patenterteilung: **19.04.89 Patentblatt 89/16**

(84) Benannte Vertragsstaaten: **BE DE FR GB NL**

(56) Entgegenhaltungen: **EP-A- 0 017 939**

(73) Patentinhaber: **BASF Aktiengesellschaft, Carl-Bosch-Strasse 38, D-6700 Ludwigshafen(DE)**

(72) Erfinder: **Taubitz, Christof, Dr., In der Dreispitz 15, D-6706 Wachenheim(DE)**
Erfinder: **Seiler, Erhard, Dr., Erpolzheimer Strasse 1, D-6700 Ludwigshafen(DE)**
Erfinder: **Schlemmer, Lothar, Duisbergstrasse 1a, D-6701 Maxdorf(DE)**

EP 0 223 115 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von modifizierten Polyphenylenetherharzen durch Aufpfropfen einer olefinisch ungesättigten Verbindung auf Polyphenylenether, die gegebenenfalls mit vinylaromatischen Polymerisaten gemischt sind sowie modifizierte Polyphenylenetherharze mit pfropfpolymerisierten Monomeren.

Bei derartigen Polymeren handelt es sich um hochmolekulare Stoffe, bei denen auf bereits vorgebildeten Molekülketten, die durch Polykondensation gewonnen wurden, nachträglich Seitenketten aus olefinisch ungesättigten Verbindungen aufgepfropft werden.

Die Modifizierung von Polyphenylenethern mit olefinisch ungesättigten Verbindungen ist bereits bekannt. So können nach üblichen Methoden z.B. Styron (vgl. z.B. US-Patente 3 862 263, 4 132 684 oder 4 148 843) eine Mischung aus Styrol und Acrylnitril (vgl. z.B. EP-A 83 098 und 59 482, US-Patente 3 522 326 und 4 486 568 sowie DE-A 3 100 534), Maleinsäureanhydrid (vgl. US-Patente 4 338 410 und 4 460 743), Vinylpyridin (vgl. US-Patent 4 278 777) Methylmethacrylat (vgl. EP-A 54 140) oder ungesättigte Carbonsäuren (vgl. EP-A 25 200) auf Polyphenylenether pfropfpolymerisiert werden. Nach bekannten Verfahren wird in Gegenwart eines organischen Peroxids entweder in Lösung oder in einem Schmelzextruder gearbeitet. Die Pfropfung einer Mischung aus Styrol mit polaren Monomeren auf Polyphenylenether in wäßriger Dispersion bei Temperaturen zwischen 90 und 190°C ist aus EP-A 17 939 bekannt. Eine Pfropfreaktion ohne wäßrige Phase bei höheren Temperaturen in Masse bzw. Schmelze führt nach der Lehre der EP-A 17 939 jedoch zu schlechten Produkten.

Die nach bekannten Verfahren erhaltenen Polyphenylenether-Pfropfpolymerisate weisen aber noch einige Nachteile auf, insbesondere im Hinblick auf Haftung auf anorganischen Pigmenten oder Glasfasern.

Aufgabe der vorliegenden Erfindung war es daher, modifizierte Polyphenylenetherharze aufzufinden, die eine verbesserte Haftung auf anorganischen Substraten aufweisen.

Diese Aufgabe wird gelöst durch Verfahren gemäß Patentansprüche 1 und 2 sowie durch Mischungen gemäß Anspruch 3.

Die in den modifizierten Polyphenylenetherharzen enthaltenen Polyphenylenether werden nach bekannten Verfahren aus in ortho-Position durch Alkylgruppen disubstituierten Phenolen durch oxidative Kupplung hergestellt (vgl. US-Patente 3 661 848, 3 219 625, 3 378 505, 3 306 874, 3 306 875 und 3 639 656). Die gegebenenfalls alkylsubstituierten Polyphenylenether sind bevorzugt mit vinylaromatischen Polymerisaten verträglich.

Polymere gelten als miteinander verträglich, wenn sie weitgehend oder ganz ineinander löslich sind (vgl. A Noshay, "Block Copolymers", Academic Press [1977], Seiten 8 bis 10; sowie 0. Olabisi, "Polymer-Polymer Miscibility", Academic Press [1979], Seiten 117 bis 189).

Verträgliche Polyphenylenether sind beispielsweise Poly(2,6-diethyl-1,4-phenylen)-ether, Poly(2-methyl-6-ethyl-1,4-phenylen)-ether, Poly(2-methyl-6-propyl-1,4-phenylen)-ether, Poly(2,6-dipropyl-1,4-phenylen)ether, Poly(2-ethyl-6-propyl-1,4-phenylen)-ether oder Copolymere, wie solche, die 2,3,6-Trimethylphenol enthalten, außerdem Polymermischungen. Besonders bevorzugt ist jedoch Poly(2,6-dimethyl-1,4-phenylen)-ether.

Die Polyphenylenether sind hochmolekular. Das Molekulargewicht aus dem Gewichtsmittel ($M_W$) beträgt 10.000 bis 80.000, im besonderen 15.000 bis 60.000.

Die Polyphenylenether sind in den modifizierten Polyphenylenetherharzen in Mengen von 99,9 bis 90 Gewichtsteilen, bevorzugt in Mengen von 99,5 bis 95 Gewichtsteilen enthalten.

Bei den oldfinisch ungesättigten Monomeren handelt es sich um Lactame, welche eine pfropfaktive, polymerisierbare Doppelbindung enthalten. Bevorzugt sind Lactame der allgemeinen Formel (I):

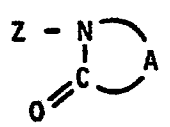

(I),

in der Z die polymerisierbare Doppelbindung enthält und A einen verzweigten oder geradkettigen Alkylenrest mit 2 bis 15 Kohlenstoffatomen darstellt.

Bevorzugt ist Z ein: Vinyl-, (Meth)acryloyl- oder Styrol-Rest, insbesondere

$CH_2=CH-$

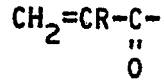

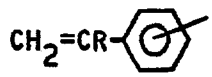

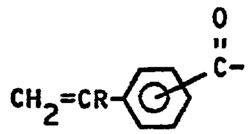

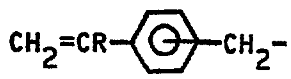

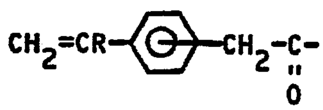

mit R = H, Alkyl.

Beispielsweise seien genannt:

β-Propiolactame (Azetidin-2-one), wie

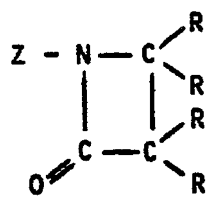

wobei R = Alkyl oder H ist, wie

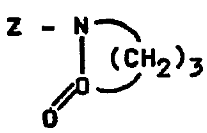

6-Caprolactam, wie

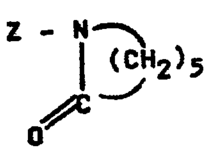

außerdem 7-Onantholactam, 8-Caprylllactam und 12-Laurinlactam gemäß:
K. Dachs, Angewandte Chemie 74, 540–545, (1962). Ganz besonders bevorzugt sind 2-Pyrrolidone und 6-Caprolactame. Es können auch Mischungen eingesetzt werden.

Besonders bevorzugt ist als Verbindung (I) ein N-(Meth)acryloyl-ε-capro-lactam gemäß Formel:

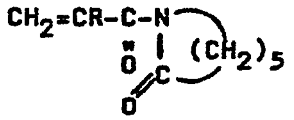

R = H oder $CH_3$

Die Lactamkomponente wird im allgemeinen in Mengen von 0,1 bis 10 Gewichtsteilen, vorzugsweise über 0,5 Gewichtsteilen, pfropfpolymerisiert. Co- oder Pfropfpolymerisate der Lactamkomponente (I) sind an sich bekannt (vgl. J. of Macromol. Sci., Part A: Chem. A18, [1982], Seiten 677 bis 687; Europ. Polymer J. 17, [1981], Seiten 851 bis 856 oder J. of Polym. Sci., Polymer Chem. Ed. 19, [1982] Seiten 223 bis 233).

Neben dem Lactam oder den Lactamgemischen können gegebenenfalls weitere, auf den Polyphenylenether pfropfpolymerisierbare Monomere mit olefinischen Doppelbindungen eingesetzt werden.

Die Lactamkomponente wird gegebenenfalls in Gegenwart eines Radikalstarters, der bevorzugt ein organisches Peroxid oder eine Azoverbindung ist, pfropfpolymerisiert. Solche sind dem Fachmann bekannt.

Besonders bevorzugt sind organische Peroxide mit einer Halbwertszeit des Zerfalls [vgl. Modern Plastics 36, [1959], [6], Seiten 142 bis 148] bei 200°C von 1 bis 30 Sekunden. Beispielhaft seien genannt: 1,1-Di-tert-butyl-peroxy-3,3,5-trimethylcyclohexan, Tert-butyl-peroxy-isopropylcarbonate, Tert-butyl-peroxy-3,3,5-trimethylhexoate, Tert-butyl-peracetat, Tert-butyl-perbenzoat, 4,4-Di-tert-butyl-peroxyvaleriansäure-n-butyl-ester, 2,2-Di-tert-butyl-peroxy-butan, Di-cumyl-peroxid, Tert-butyl-cumyl-peroxid, 1,3-Bis(tert-butyl-peroxyisopropyl)benzol und Di-tert-butylperoxid. Die Wahl des Radikalstarters richtet sich nach der gewünschten Reaktionstemperatur.

Der Starter kann bei einer Reaktionstemperatur von über 250°C bei ausreichender Reaktionsdauer beispielsweise in der Schmelze fehlen, gegebenenfalls ist er in Mengen unter 10 Gew.-%, bevorzugt unter 5 Gew.-% anwesend, bevorzugt, wenn man in Lösung umsetzt.

Die Mischungen enthalten gegebenenfalls noch mit dem Polyphenylenether verträgliche vinylaromatische Polymerisate.

Mit Polyphenylenether verträgliche vinylaromatische Polymerisate sind beispielsweise von O. Olabisi in "Polymer-Polymer Miscibility", Academic Press (1979), Seiten 224 bis 230 und 245 und in "Ullmanns Encyklopädie der technischen Chemie" 4. Auflage, Band 19, Seiten 265 bis 295, Verlag Chemie GmbH, 1980 beschrieben. Besonders geeignet sind vinylaromatische Polymersate, die bestehen aus: Styrol, Chlorstyrol, α-Methylstyrol, p-Methylstyrol, im untergeordneten Maße aus (Methyl)acrylnitrilen, (vorzugsweise unter 8 Gew.-%). Bevorzugt wird Polystyrol eingesetzt.

Das Molekulargewicht der vinylaromatischen Polymeren aus dem Gewichtsmittel ($M_W$) beträgt 1500 bis 2 000 000, besonders bevorzugt 70.000 bis 1 000 000.

Die Polymerisate können durch die üblichen Polymerisationsverfahren, wie Masse-, Suspensions-, Emulsions- oder Lösungspolymerisation hergestellt werden.

Die Styrolpolymerisate können auch schlagzäh modifiziert sein. Solche Polymerisate sind dem Fachmann als schlagzähes Polystyrol (HIPS) bekannt. Dabei werden die vinylaromatischen Polymerisate in Gegenwart eines Schlagzähmodifiziers hergestellt oder die vinylaromatischen Polymerisate mit gepfropften Synthesekautschuken abgemischt. Als Synthesekautschuke seien genannt: Polybutadien, Styrol-Butadien-, Acrylnitril-Butadien-, Ethylen-Propylen-, Polyacrylat- und Polyisopren-Kautschuke.

Die vinylaromatischen Polymerisate sind bevorzugt in den erfindungsgemäßen Polyphenylenetherharzen vorhanden, wenn man sie in der Schmelze herstellt. Bei deren Abwesenheit erhält man stärker bis vollständig vernetzte Produkte. Die vinylaromatischen Polymerisate sind in Mengen von 0 bis 1000 Gew.-Teilen, besonders bevorzugt in Mengen von 5 bis 80 Gew.-Teilen im Polyphenylenetherharz enthalten.

Zur Umsetzung werden die Komponenten in der Schmelze der Polymeren bei Temperaturen zwischen 240 und 300°C innig vermischt. Vorzugsweise verwendet man dafür einen Zweischneckenextruder. Die Verweilzeit beträgt im allgemeinen 0,5 bis 10 Minuten, bevorzugt 1 bis 5 Minuten.

Die Komponenten werden vorzugsweise gemeinsam dosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Die Granulate sind vielfältig verwendbar.

Die erfindungsgemäßen modifizierten Harze können in der üblichen Weise modifiziert werden. Sie können daher z.B. Verstärkungs- und Füllstoffe, insbesondere Glasfasern, Flammschutzmittel, Stabilisatoren, Gleit- und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum Asbest, Titandioxid, Aluminiumoxid, Micovit, Kreide oder calciniertes Aluminiumsilikat eingesetzt werden.

Die erfindungsgemäßen Harze können als Haftmittler eingesetzt werden. Sie eignen sich auch als Werkstoffe, Folien, dünne Haftschichten, Schmelzkleber und Beschichtungen.

Beispiel 1

97 Gew.-Teile Poly-(2,6-dimethyl-1,4-phenylen)-ether (= PPE) mit einer relativen Viskosität von 0,64 (gemessen in 1 Gew.-%iger $CHCl_3$-Lösung bei 25°C) und 3 Gew.-Teilen NMCL = N-Methacryloyl-ε-caprolactam werden in einem Zweischneckenextruder (ZSK 53) der Firma Werner und Pfleiderer dosiert und in einem ersten Teil unter Verwendung von Knetelementen bei 270° aufgeschmolzen, anschließend in einem zweiten Teil unter Kneten und Verwendung von zurückfördernden Knetelementen bei 270°C umgesetzt und anschließend in einer Entgasungszone bei 280°C durch Anlegen und Vakuum entgast. Die mittlere Verweilzeit im Extruder beträgt 3 Minuten. Die austretende Schmelze wird durch ein Wasserbad geleitet, granuliert und getrocknet. Das Granulat ist zu 20 Gew.-% in Toluol unlöslich. Man preßt einen Film und bestimmt IR-spektroskopisch den NMCL-Gehalt mit 1 Gew.-% im Polyphenyletherharz.

Beispiel 2

1 Gew.-Teil Dicumylperoxid, aufgebracht auf 1,5 Gew.-Teile Tonerde, 90,5 Gew.-Teile PPE gemäß Beispiel 1,5 Gew.-Teile Polystyrol (PS 144 C, Fa. BASF, MFI 200 (5.0 = 24 g/10 Min.) und 2 Gew.-Teile NMCL werden gemäß Beispiel 1 umgesetzt. Das Granulat ist zu 6 Gew.-% in Toluol unlöslich, der NMCL-Gehalt beträgt 1,2 Gew.-%.

Beispiel 3

90 Gew.-Teile PPE gemäß Beispiel 1,5 Gew.-Teile Polystyrol, 4,1 Gew.-Teile NMCL und 1 Gew.-Teil Dicumylperoxid werden gemäß Beispiel 2 umgesetzt. Das Granulat ist zu 6 Gew.-% in Toluol unlöslich, der NMCL-Gehalt beträgt 1,8 Gew.-%.

Beispiel 4

90 Gew.-Teile PPE gemäß Beispiel 1,5 Gew.-Teile PS gemäß Beispiel 2 und 0,8 Gew.-Teile Dicumylperoxid, aufgebracht auf 1,2 Gew.-Teile Tonerde, werden in einem Extruder gemäß Beispiel 1 dosiert. Am zweiten Gehäuse des Extruders wird eine Mischung aus einem Gewichtsteil NMCL und 2 Gew.-Teilen MMA = Methylmethacrylat zugepumpt. Die Aufschmelztemperatur beträgt 270°C, die Reaktionstemperatur 260°C, die Entgasungstemperatur 270°C. Das Granulat ist zu 7 Gew.-% in Toluol unlöslich, der NMCL-Gehalt beträgt. 0,6 Gew.-%.

**Patentansprüche**

1. Verfahren zur Herstellung von modifizierten Polyphenylenetherharzen durch Aufpfropfen eines olefinisch ungesättigten Monomeren, das eine Lactamgruppe enthält, auf Polyphenylenether mit Molekulargewichten (Mw) von 10 000 bis 80 000, die gegebenenfalls mit Polymerisaten aus vinylaromatischen Verbindungen gemischt sind, dadurch gekennzeichnet, daß man in der Schmelze der Polymern bei Temperaturen zwischen 240 und 300°C pfropfpolymerisiert.

2. Verfahren nach Anspruch 1, dadurch gekennzeichnet, daß das Lactammonomer die allgemeine Formel (I)

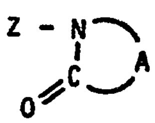

(I)

aufweist, worin A ein verzweigter oder gradkettiger Alkylenrest mit 2 bis 15 Kohlenstoffatomen und Z ein Vinyl-, (Meth-)acryloyl- oder Styrolrest ist.

3. Modifizierte Polyphenylenetherharze hergestellt nach Anspruch 1 aus 99,9 bis 90 Gew.-Teilen Polyphenylenether, 0 bis 1000 Gew.-Teilen vinylaromatischen Polymerisaten und 0,1 bis 10 Gew.-Teilen pfropfpolymerisiertem Lactammonomer.

**Claims**

1. A process for the preparation of a modified polyphenylene ether resin by grafting an olefinically unsaturated monomer which contains a lactam group onto a polyphenylene ether which has a molecular weight (Mw) of from 10,000 to 80,000 and may be mixed with polymers of vinylaromatic compounds, wherein the graft polymerization is carried out in the melt of the polymers at from 240 to 300°C.

2. A process as claimed in claim 1, wherein the lactam monomer is of the formula (I)

(I) 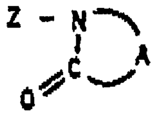

where A is a branched or straight-chain alkylene radical of 2 to 15 carbon atoms and Z is a vinyl, (meth)acryloyl or styrene radical.

3. A modified polyphenylene ether resin prepared as claimed in claim 1 from 99.9–90 parts by weight of polyphenylene ether, 0–1,000 parts by weight of vinylaromatic polymers and 0.1–10 parts by weight of a graft-polymerized lactam monomer.

**Revendications**

1. Procédé de préparation de résines de poly(oxyde de phénylène) modifiées par greffage d'un monomère à insaturation oléfinique qui contient un groupement lactame, sur un poly(oxyde de phénylène) de poids moléculaire ($M_W$) de 10 000 à 80 000, qui sont éventuellement mélangées avec des polymères de composés vinylaromatiques, caractérisé en ce qu'on effectue la polymérisation par greffage sur la masse fondue du polymère à des températures comprises entre 240 et 300°C.

2. Procédé selon la revendication 1, caractérisé en ce que le lactame monomère a la formule générale (I)

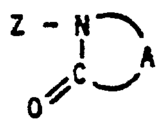 (I)

dans laquelle A est un reste alkylène à chaîne droite ou ramifiée de 2 à 15 atomes de carbone et Z est un reste vinyle, (méth)acryloyle ou styrène.

3. Résines de poly(oxyde de phénylène) modifiées préparées selon la revendication 1, à partir de 99,9 à 90 parties en poids de poly(oxyde de phénylène), de 0 à 1000 parties en poids de polymères vinylaromatiques et de 0,1 à 10 parties en poids d'un lactame monomère polymérisé par greffage.